# EUROPÄISCHE PATENTANMELDUNG

(11) **EP 4 721 918 A1**
(43) Veröffentlichungstag der Anmeldung: **08.04.2026**
(21) Anmeldenummer: 25203876.5
(22) Anmeldetag: 07.08.2018
(51) Int. Cl.: B23Q 17/09, B23Q 17/24, G01B 11/24

(54) **ERSTELLUNG EINES DIGITALEN ZWILLINGS IN EINEM BEARBEITUNGSZENTRUM**

(30) Priorität: 07.08.2017 DE 102017117840
(62) Teilanmeldung aus: 18753136.3
(71) Anmelder: Franz Haimer Maschinenbau KG, 86568 Hollenbach-Igenhausen (DE)
(72) Erfinder: ZIEGLTRUM, Franz, 86568 Hollenbach (DE)
(74) Vertreter: Meissner Bolte Partnerschaft mbB

(57) **Zusammenfassung**

Bearbeitungszentrum (1) zum Zerspanen von Werkstoffen, bestehend aus einer Zerspanungsmaschine (2a) und einem Einstellgerät (5), wobei das Einstellgerät (5) eine Positioniereinrichtung (8), eine Beleuchtungseinrichtung (9, 9a) und einen Bildsensor (11) aufweist, wobei die Positioniereinrichtung (8) eine mittels der Beleuchtungseinrichtung (9, 9a) anzustrahlende Werkzeugeinheit (10) derart vor dem Bildsensor (11) hält, wobei der Bildsensor (11) von der Werkzeugeinheit (10) teilweise abgeschattet wird, wobei der Bildsensor (11) in mindestens einer Raumkoordinatenrichtung eine größere maximale Erstreckung aufweist als die Werkzeugeinheit (10) in der gleichen Raumkoordinatenrichtung, und wobei mithilfe des Werts für die Erstreckung des abgeschatteten Bereichs die Hüllkontur der Werkzeugeinheit (10) bestimmt wird.

## Beschreibung

Die Erfindung betrifft ein Bearbeitungszentrum nach dem Oberbegriff des Anspruchs 1, ein entsprechendes Verfahren und eine entsprechende Verwendung.

### TECHNISCHER HINTERGRUND

Unter Werkzeugeinheiten versteht man im Rahmen dieser Anmeldung zunächst auch einzelne Werkzeuge, wie etwa Fräser. Überwiegend und daher bevorzugt werden mit dem Begriff Werkzeugeinheit allerdings vollständige Einheiten aus einem Werkzeughalter, einem in den Werkzeughalter eingebauten Zerspanwerkzeug und eventuellen Zubehörteilen verstanden.

### DIE SOGENANNTE WERKZEUGVOREINSTELLUNG

Schon seit langem wird von den Werkzeugmaschinen die Position der Schneidkante des Werkzeugs berücksichtigt.

Zu diesem Zweck wurden die Daten der Werkzeugeinheiten bisher entweder auf Papier in Form eines Einrichteblatts oder digital in Form einer Stückliste festgelegt. Die Unterlagen enthalten in der Regel zumindest Daten in Gestalt der Bezeichnung des Werkzeugs und der Artikelnummern seiner Einzelteile, sowie die Soll-Positionsmaße der Schneidkanten mit der Toleranz.

Bei der Werkzeugmontage werden die Komplettwerkzeuge anhand dieser Daten montiert und vermessen, nötigenfalls eingestellt. Man spricht von der sogenannten Voreinstellung. Durch die Voreinstellung wird sichergestellt, dass die Schneidkanten des Werkzeugs die für die geplante Bearbeitung akzeptablen Positionsmaße haben.

Die Ist-Positionsmaße der Schneidkanten werden an die Steuerung der Maschine übertragen, manuell oder auf den bekannten elektronischen Wegen.

Die Steuerung der Zerspanungsmaschine kann dann innerhalb eines bestimmten Rahmens Positionsabweichungen, die die Schneidkanten des Werkzeugs aufweisen, durch eine Anpassung der Verfahrwege ausgleichen.

Die Position der Schneidkanten wird häufig optisch mit digitalen Kameras vermessen.

Da für das Vermessen der Schneidkanten eine hohe Genauigkeit gefordert ist, die meist im Bereich zwischen 0,001 mm und 0,02 mm liegt, verfügen die Kameras über eine sehr hohe Auflösung. Damit geht aber nur ein kleines Erfassungsfenster einher. Die gängigen Systeme erfassen daher nur einen Bereich von etwa 5 mm x 5 mm bis 10 mm x 10 mm.

Die entsprechende Kamera wird in einem definierten Abstand von der Rotationsachse des Werkzeugs montiert und ist parallel in Richtung der Z-Achse und senkrecht in Richtung der Y-Achse relativ zur Drehachse des Werkzeugs verfahrbar. Die Kamera verfügt über eine Optik, die so gestaltet ist, dass ihr Fokus genau in derjenigen Ebene senkrecht zur Blickrichtung der Kamera liegt, die die Drehachse des Werkzeugs enthält. Der Fokussierbereich, d. h. die Schärfentiefe, umfasst einen kleinen Bereich vor und hinter der Fokalebene. In der Regel werden telezentrische Objektive genutzt.

### DIE KOLLISIONSPRÜFUNG FÜR DIE KOMPLETTE WERKZEUGEINHEIT

Bei modernen Bearbeitungszentren hat es jedoch mit der Berücksichtigung der Position der Schneidkante noch nicht sein Bewenden.

Stattdessen wird bei modernen Bearbeitungszentren im Regelfall eine Kollisionsüberwachung durchgeführt. Zu diesem Zweck wird der gesamte Bearbeitungsvorgang zumindest rechnerisch simuliert und geprüft, ob es zwischen der Werkzeugeinheit und dem Werkstück bzw. den umliegenden Bauteilen (Maschinentisch, Spannvorrichtung etc.) zu Kollisionen kommt.

Zu diesem Zweck reichen die Daten über die Lage der Schneidkante nicht aus, stattdessen wird die Information benötigt, wie die Hüllkontur der jeweiligen Werkzeugeinheit aussieht, die dafür verantwortlich ist, ob die rotierende Werkzeugeinheit (noch) den nötigen Freigang hat oder im Laufe der Bearbeitung an irgendeiner Stelle unbeabsichtigt mit dem Werkstück kollidiert. Man benötigt also ein digitales Abbild des Komplettwerkzeugs, den sog. "digitalen Zwilling".

Die Daten über die Hüllkontur können und müssen manuell eingegeben werden.

Alternativ bedient man sich heute der Daten, die die Hersteller der Werkzeuge bzw. Werkzeughalter und Zubehörteile für ihre Produkte erfasst haben und an ihre Abnehmer weitergeben, soweit das der Fall ist - bei Weitem nicht immer stehen solche Daten zur Verfügung. Die Daten sind allerdings nicht einheitlich in ihrem Format und sie müssen nicht immer genau stimmen. Darüber hinaus stellt man in der Praxis fest, dass sich im Zuge des Zusammenbaus von beispielsweise dem Werkzeughalter und dem Zerspanwerkzeug, für die beide herstellerseitig eigene Datensätze zur Hüllkontur zur Verfügung gestellt worden sind, Ungenauigkeiten ergeben. Bei Sonderwerkzeugen sind häufig keine Zeichnungen vom Hersteller verfügbar.

Oft wird auch versucht, die Geometrie eines Werkzeuges über eine Reihe von definierten Parametern, sogenannte Sachmerkmal-Listen, z. B. nach der Normenreihe DIN 4000, zu beschreiben. Allerdings kann mit dieser Methode nur eine begrenzte Anzahl von charakteristischen Eigenschaften eines Werkzeuges bestimmt werden, wie z. B. Länge und Durchmesser. Eine komplette Beschreibung der Außenkontur ist so nicht möglich. Zudem stehen die entsprechenden Daten nicht immer und oft auch nur unvollständig zur Verfügung.

In jedem Fall ist der Aufwand, um einen digitalen Zwilling des Komplettwerkzeugs herzustellen, sehr hoch. Selbst bei einem nur mittelgroßen Betrieb ist der Aufwand von mehreren Mannjahren erforderlich, um die im Bestand befindlichen Werkzeuge elektronisch als digitalen Zwilling zu hinterlegen.

### DAS DER ERFINDUNG ZUGRUNDE LIEGENDE PROBLEM

Der Erfindung liegt die Aufgabe zugrunde, eine Vorrichtung zu schaffen, mit der rationell ein digitaler Zwilling einer Werkzeugeinheit angefertigt werden kann.

### DIE ERFINDUNGSGEMÄSSE LÖSUNG

Zur Lösung dieses Problems wird ein besonderes Bearbeitungszentrum zum Zerspanen von Werkstoffen vorgeschlagen.

Dieses Bearbeitungszentrum besteht aus einer Zerspanungsmaschine und einem Einstellgerät.

Es zeichnet sich dadurch aus, dass das Einstellgerät eine Positionierungseinrichtung, eine Beleuchtungseinrichtung und einen Bildsensor aufweist.

Die Positionierungseinrichtung ist so gestaltet, dass sie eine mittels der Beleuchtungseinrichtung anzustrahlende Werkzeugeinheit derart vor dem Bildsensor in Position hält, dass der Bildsensor von der Werkzeugeinheit teilweise abgeschattet wird.

Erfindungsgemäß weist der Bildsensor dabei in mindestens einer Raumkoordinatenrichtung eine größere maximale Erstreckung auf als die Werkzeugeinheit in der gleichen Raumkoordinatenrichtung. Mithilfe des Werts für die Erstreckung des abgeschalteten Bereichs wird die Hüllkontur der Werkzeugeinheit bestimmt.

Der Erfindung liegt die Erkenntnis zugrunde, dass zur Anfertigung eines digitalen Zwillings jene sehr hohe Genauigkeit, die für die Werkzeugvoreinstellung benötigt wird, nicht notwendig ist.

Im Rahmen der Werkzeugvoreinstellung ist eine optische Abtastung der Schneiden erforderlich, die mindestens im Regelfall bis auf 5/1000 mm genau sein muss.

Für die Kollisionsbetrachtung reicht eine um Dimensionen schlechtere Genauigkeit. Denn die Werkzeugeinheit muss im Betrieb von kollisionsgefährdeten Bereichen ohnehin einen Abstand von mehreren Millimetern einhalten, um sicher eine unzulässige Kollision ausschließen zu können - auch unter dem Einfluss betriebsbedingter Vibrationen. Neben der Kollisionsprüfung können zweckmäßig andere Simulationen im CAD/CAM das Werkzeugmodell nutzen. Mit der sogenannten ViaFit-Funktion können beispielsweise physikalische Zwillinge gegen das digitale Muster geprüft werden. Die ViaFit-Funktion gibt eine höhere Genauigkeit an als bei dieser Erfindung gefordert.

Erfindungsgemäß ist vorgesehen, die Erstreckung bzw. Länge des abgeschalteten Bereichs nur mit einer Genauigkeit von mindestens 0,5 mm, in manchen Fällen von mindestens 0,25 mm und idealerweise von zumindest 0,1 mm zu ermitteln. Daher können für die Umsetzung der Erfindung Messeinrichtungen verwendet werden, die bei relativ geringer Auflösung einen großen Bildbereich erfassen.

Auf diese Art und Weise lässt sich das komplette Werkzeug mit einigen wenigen Schritten oder im Idealfall sogar mit einer einzigen Aufnahme abbilden. Somit kann auch ein größerer Bestand an Werkzeugeinheiten schnell und einfach digitalisiert werden.

Das erfindungsgemäße Bearbeitungszentrum eignet sich in besonderem Maß zur Herstellung eines digitalen Zwillings von Werkzeugeinheiten, die aus einem Werkzeugspannfutter und einem darin montierten Zerspanwerkzeug bestehen. Es wird daher weit überwiegend zu diesem Zweck eingesetzt. Es kann aber vom Grundsatz her auch dazu eingesetzt werden, um lediglich das Werkzeugspannfutter und/oder lediglich das Zerspanwerkzeug so zu vermessen, dass hiervon ein digitaler Zwilling erzeugt wird.

Dementsprechend hat der Begriff Werkzeugeinheit im vorliegenden Kontext eine doppelte Bedeutung.

In seinem engeren Sinne bezeichnet er den Zusammenbau eines Werkzeugspannfutters mit einem darin montierten Zerspanwerkzeug. In seinem weiteren Sinne bezeichnet er auch ein bloßes Zerspanwerkzeug - auch wenn diese weite Bedeutung eindeutig nicht bevorzugt ist.

Die Zerspanungsmaschine und das Einstellgerät, die zu dem Bearbeitungszentrum gehören, sind vorzugsweise unmittelbar miteinander verkettet oder sogar physisch Bestandteil einer einzigen Maschine mit einem gemeinsamen Sockel.

In anderen Fällen reicht es aber für die Verwirklichung der Erfindung auch aus, wenn die Zerspanungsmaschine und das Einstellgerät lediglich zwei separate Vorrichtungen sind, die miteinander kooperieren.

Unter einer Positionierungseinrichtung wird im Regelfall eine Halteeinrichtung verstanden, die die zu vermessende Werkzeugeinheit in einer vorbestimmten Position reib- und/oder formschlüssig festhält bzw. zumindest lokal umklammert und dann auf die unterschiedlichen Durchmesser der zu vermessenden Werkzeugeinheiten eingehen kann.

In einfacheren Fällen kann aber bereits eine Abstellebene eine solche Positionierungseinrichtung sein, auch wenn das eindeutig nicht bevorzugt ist.

Unter der Erstreckung des abgeschatteten Bereichs versteht man dessen Länge bzw. Fläche. Dort, wo - wie gleich noch näher darzulegen ist - ein Liniensensor als Bildsensor verwendet wird, ist in einer ersten Ausführungsform die Erstreckung des abgeschatteten Bereichs die Länge, auf der der Liniensensor abgeschattet wird und die zwischen zwei beleuchteten Abschnitten des Liniensensors liegt. In einer zweiten, bevorzugten Ausführungsform wird nur eine Hälfte der Werkzeugeinheit beleuchtet, also von dessen Rotationsachse aus orthogonal bis zu dessen äußeren Rand. In diesem Fall erstreckt sich der abgeschattete Bereich von der Rotationsachse aus orthogonal bis zum beleuchteten Bereich des Sensors.

Dort, wo - wie gleich noch näher darzulegen ist - ein Plattensensor als Bildsensor verwendet wird, stellt die Erstreckung des abgeschatteten Bereichs die Fläche des abgeschatteten Bereichs dar, die orthogonal zur Rotationsachse der Werkzeugeinheit zumindest zwischen zwei seitlich neben der zu vermessenden Werkzeugeinheit positionierten, beleuchteten Bereichen oder zwischen der Rotationsachse und einem beleuchteten Bereich liegt und die zugleich in Richtung der Rotationsachse zwischen einem oberhalb der zu vermessenden Werkzeugeinheit positionierten, beleuchteten Bereich liegt und entweder einem unterhalb der zu vermessenden Werkzeugeinheit positionierten, ebenfalls beleuchteten Bereich liegt oder der Standfläche, auf der die zu vermessende Werkzeugeinheit aufliegt.

Die Beleuchtungseinrichtung ist dabei eine Einrichtung, welche Strahlung im sichtbaren und/oder unsichtbaren Frequenzbereich aussendet, die von einem Bildsensor detektiert werden kann, d. h. dort ein elektrisches Signal ausgelöst.

Der Bildsensor ist dabei eine Einrichtung, die ihre Lichtempfindlichkeit aus einer Schar bzw. Matrix einzelner Pixel bezieht. Für diese Pixel kann, vorzugsweise einzeln oder zu Clustern zusammengefasst (beispielsweise Vierercluster), festgestellt werden, ob sie beleuchtet oder nicht beleuchtet sind und/oder ob sie mehr oder weniger als mit einer bestimmten Grenzintensität beleuchtet werden. Auf diese Art und Weise kann Pixel für Pixel oder clusterweise festgestellt werden, ob das betreffende Pixel bzw. der betreffende Cluster noch in dem von der zu vermessenden Werkzeugeinheit geworfenen Schatten liegt oder nicht.

Auf diese Art und Weise lässt sich die besagte Erstreckung des abgeschatteten Bereichs bestimmen.

### BEVORZUGTE WEITERBILDUNGEN DER ERFINDUNG

Idealerweise ist der Bildsensor ein Plattensensor, der in zwei zueinander senkrechten Raumkoordinatenrichtungen eine größere maximale Erstreckung aufweist als die Werkzeugeinheit in den gleichen Raumkoordinatenrichtungen. Ideal ist ein Format von mehr als 400 mm x 200 mm.

Wenn man beispielsweise den orthogonalen Abstand zwischen der zu vermessenden Werkzeugeinheit und dem Plattensensor als X-Achse definiert, dann hat also ein solcher Plattensensor entlang der Y-Achse und entlang der Z-Achse größere maximale Erstreckungen als die Werkzeugeinheit entlang der besagten Achsen.

Ein solcher Plattensensor hat den Vorteil, dass er die Größe der gesamten Fläche, die durch die zu untersuchende Werkzeugeinheit abgeschattet wird, auf einmal erfassen kann.

Für eine fotorealistische Darstellung wäre ein solcher Plattensensor unbrauchbar, da das von ihm gelieferte fotografische Abbild beliebig unscharf wäre. Bei einem beliebig unscharfen fotografischen Abbild ist auch der Schattenwurf sehr unpräzise, was insbesondere die Umsetzung problematisch macht. Für die Bestimmung eines Schattenwurfs mit einer der oben angegebenen, relativ großzügigen Toleranzen lässt sich ein entsprechend großflächiger Plattensensor aber ohne Probleme bauen.

Wo beispielsweise aus Kostengründen keine ausgesprochenen Sonder-Sensoren, wie der besagte Plattensensor, gefragt sind, ist es günstig, den Bildsensor als Liniensensor auszuführen, der sich in eine erste Raumkoordinatenrichtung erstreckt. Im einfachsten Fall dient einer der bisher in Faxgeräten verbauten Liniensensoren als Bildsensor.

In dieser ersten Raumkoordinatenrichtung weist der Liniensensor eine größere maximale Erstreckung auf als die Werkzeugeinheit in der gleichen Raumkoordinatenrichtung. Vorzugsweise ist die Erstreckung des Liniensensors in Richtung entlang der ersten Raumkoordinatenrichtung um mindestens den Faktor 20 größer als seine Erstreckung entlang der zweiten Raumkoordinatenrichtung. Ein solcher Zeilensensor enthält dann ggf. nur eine einzige Zeile mit Pixeln oder Clustern aus gleichgeschalteten Pixeln oder mehrere Zeilen.

Wenn man beispielsweise den orthogonalen Abstand zwischen der zu vermessenden Werkzeugeinheit und dem Liniensensor der Anschauung halber auch hier wieder als X-Achse definiert, dann hat ein solcher Liniensensor z. B. in Richtung entlang der Y-Achse eine größere maximale Erstreckung, als sie die Werkzeugeinheit entlang der besagten Achse hat.

Die Messung erfolgt dann in mehreren nacheinander folgenden Schritten. Gemessen wird fortschreitend entlang einer zweiten Raumkoordinatenrichtung, die senkrecht auf die besagte erste Raumkoordinatenrichtung des Liniensensors steht. Dies kann, um beim oben begonnenen Beispiel zu bleiben, die Z-Achse sein. Zu diesem Zweck werden zumindest der Liniensensor und die Lichtquelle oder aber das Werkstück nach jeder Messung in Richtung der zweiten Raumkoordinatenrichtung bewegt.

Auf diese Art und Weise erhält man ein realistisches Abbild des Schattenwurfs der zu vermessenden Werkzeugeinheit aus mehreren Einzelteilen.

Der entscheidende Punkt ist, dass ein Liniensensor sehr groß gebaut werden kann, ohne dass er in jedem Messschritt einen von seinem Umfang her problematischen Datensatz erzeugt. Es ist in einem derartigen Einsatzfall effizienter, wenn zunächst nur von ihrem Umfang her beschränkte Datensätze erzeugt werden, die bereits ausgewertet werden können, wenn der Liniensensor seine nächste Position anfährt. Auf diese Art und Weise kann synchron gearbeitet werden, was schneller geht.

Idealerweise ist die Beleuchtungseinrichtung so gestaltet, dass sie ein paralleles, besser ein polarisiertes und bevorzugt ein kohärentes Licht aussendet.

Im einfachsten Fall ist die Beleuchtungseinrichtung also eine Lampe, deren Lichtstrahl durch eine Schlitzblende geleitet wird und die daher nur einen balkenförmigen Bereich beleuchtet.

Bevorzugt umfasst die Beleuchtungseinrichtung jedoch eine Lampe, deren Lichtstrahl durch einen Polarisationsfilter geleitet wird und eventuell zusätzlich durch eine Blende, bevor er der zu vermessenden Werkzeugeinheit zugeleitet wird. Die Verwendung polarisierten Lichts führt dazu, dass die Hell-/Dunkelgrenze schärfer ausgeprägt ist. Dadurch kann genauer bestimmt werden, wo der Schattenwurf der zu vermessenden Werkzeugeinheit beginnt und endet.

Idealerweise ist die Beleuchtungseinrichtung derart, dass sie kohärentes Licht aussendet. Zu diesem Zweck ist die Beleuchtungseinrichtung ein einzelner Laser oder noch besser ein linienförmiges Laser-Array. Dadurch, dass kohärentes Licht nicht streut, lässt sich hier die Hell-/Dunkelgrenze mit ausgesprochen guter Präzision bestimmen.

Erfindungsgemäß besonders günstig ist es, ein Laser-Array mit einem Abstand von mindestens 0,5 mm, besser mindestens 0,25 mm oder noch besser 0,1 mm zwischen unmittelbar benachbarten Laserstrahlen zu verwenden. Eine solche Ausgestaltung hat den Vorteil, dass auch der Bildsensor ebenfalls nur eine entsprechend geringe Anzahl von Pixeln aufweisen muss, wodurch sich ein extrem schnell arbeitendes System ergibt.

Das ist schon bei der Verwendung eines Liniensensors sehr vorteilhaft, wirkt sich aber erst recht dann besonders günstig aus, wenn ein zweidimensionales Laser-Array zum Einsatz kommt.

Um in jenen Fällen, in denen es keine hundertprozentig scharfe Hell-/Dunkelgrenze gibt, sondern ein mehr oder minder ausgeprägter Dämmerungsbereich zwischen den hellen und den dunklen Flächen besteht, zu einer präziseren Messung zu kommen, ist die erfindungsgemäße Vorrichtung so ausgestaltet, dass sie die Signalstärke auswertet, die ein einzelnes Pixel oder ein Cluster von Pixeln unter Lichteinfall liefert. Idealerweise wird dann ein Pixel als abgedunkelt bewertet, wenn seine Signalstärke maximal 75 % eines Pixels beträgt, das zu 100 % als beleuchtet erkannt worden ist.

Besonders günstig ist es, wenn die Positionierungseinrichtung so gestaltet ist, dass sie die Werkzeugeinheit während der Messung in Rotation versetzt. Die Rotationsgeschwindigkeit ist dabei bevorzugt so hoch, dass sich ein Schattenwurf ergibt, der als Schattenwurf mit feststehenden Linien erkannt werden kann. Das ist rein beispielhaft dann der Fall, wenn aufgrund der Rotation alle Pixel, die zumindest zeitweilig im Bereich des Schattenwurfs liegen, im Mittel nur noch eine Signalstärke liefern, die so weit von der Signalstärke eines zu 100 % beleuchteten Pixels entfernt ist, dass das betreffende Pixel als abgeschattet erkannt wird.

Besonders günstig ist es, wenn die erfindungsgemäße Vorrichtung eine im Wesentlichen vollständig abdunkelbare Messkammer besitzt. Auf diese Art und Weise kann von umgebendem Streulicht ungestört gearbeitet werden.

Idealerweise besitzt die Messkammer lichtschluckend ausgerüstete Innenoberflächen, sodass von der zu vermessenden Werkzeugeinheit abgelenkte Lichtreflexe das Messergebnis nicht verfälschen, d. h. kein oder kein wesentliches Signal am Bildsensor erzeugen.

### EIN ANDERES PROBLEM IM ZUSAMMENHANG MIT DER ERFINDUNG

Nicht zuletzt für kleine Serien stellt sich die Aufgabe, eine Lösung anzugeben, die sich in möglichst großem Umfang verfügbarer Komponenten bedient, um die erfindungsgemäße Messung durchzuführen.

### DIE ALTERNATIVE ERFINDUNGSGEMÄSSE LÖSUNG

Dieses anderweitige Problem im Zusammenhang mit dem Erfindungsansatz wird durch ein Verfahren mit dem Oberbegriff des weiteren Hauptanspruchs gelöst und durch eine entsprechend gestaltete Vorrichtung und Verwendung, die beide ebenfalls beansprucht werden.

So wird ein Verfahren eben zur Herstellung eines digitalen Zwillings einer Werkzeugeinheit aus einem Werkzeughalter und einem Werkzeugeinsatz vorgeschlagen, das sich dadurch auszeichnet, dass die vorzugsweise rotierende Werkzeugeinheit vor einem Messraster positioniert wird.

Dann wird ein digitales Bild von dem Messraster mit der davorstehenden Werkzeugeinheit aufgenommen.

Daraufhin wird die Länge der sich - im Regelfall orthogonal - in zwei Raumrichtungen kreuzenden Messlinien bestimmt.

Für Messlinien, deren Länge kürzer ist als die einer ungestört in gleicher Richtung durchgehenden Messlinie, wird berechnet, an welcher (vom Außenrand oder vom nächstliegenden Kreuzungspunkt entfernten) Position die Messlinie endet. Aus den so erhaltenen Endpunkten werden vorzugsweise durch Interpolation zwischen unmittelbar benachbarten Endpunkten die Hüllkontur und damit das Abbild der Werkzeugeinheit berechnet.

Der große Vorteil dieses Verfahrens liegt darin, dass das Bearbeitungszentrum bzw. dessen Einstellgerät unter Verwendung handelsüblicher Bildsensoren aufgebaut werden kann, so dass die zu leistende Individualisierungsarbeit im Wesentlichen softwareseitig vorzunehmen ist, weshalb sich dieses System nicht zuletzt hervorragend für Kleinserien eignet.

### SONSTIGES

Weitere Ausgestaltungsmöglichkeiten, Wirkungsweisen und Vorteile der Erfindung ergeben sich aus der nachfolgenden Beschreibung von verschiedenen Ausführungsbeispielen anhand der Figuren.

Anzumerken ist noch, dass auch Schutz für die Verwendung eines Bildsensors und einer vorzugsweise kollimierten Lichtquelle oder eines einzelnen Lasers oder eines mehrflammigen Laserbalkens zur Bestimmung der durch eine rotierende Werkzeugeinheit hervorgerufenen Abschattungsfläche oder -kontur beansprucht wird.

### FIGURENLISTE

Die Figur 1 zeigt einen generellen Überblick über ein erfindungsgemäßes Bearbeitungssystem.

Die Figur 2 zeigt einen erfindungsgemäßen Aufnehmer, der mit kollimiertem Licht und einem Liniensensor arbeitet.

Die Figur 3 zeigt eine Seitenansicht der Figur 2.

Die Figur 4 zeigt eine Variante der Figur 2, bei der aber nicht Schritt für Schritt in Richtung entlang der Betriebsdrehachse der Werkzeugeinheit vermessen wird, sondern Schritt für Schritt parallel zur Betriebsdrehachse der Werkzeugeinheit fortschreitend.

Die Figur 5 zeigt eine Variante, bei der mit einem aufgefächerten Lichtstrahl gemessen wird.

Die Figur 6 zeigt eine Variante, bei der mit einem einzelnen Laserstrahl gemessen wird.

Die Figur 7 zeigt eine völlig alternative Art der Messung mithilfe eines konventionellen Bildsensors und einem Messraster.

### AUSFÜHRUNGSBEISPIELE

### GRUNDSÄTZLICHES ZUR ERFINDUNGSGEMÄSSEN ANORDNUNG

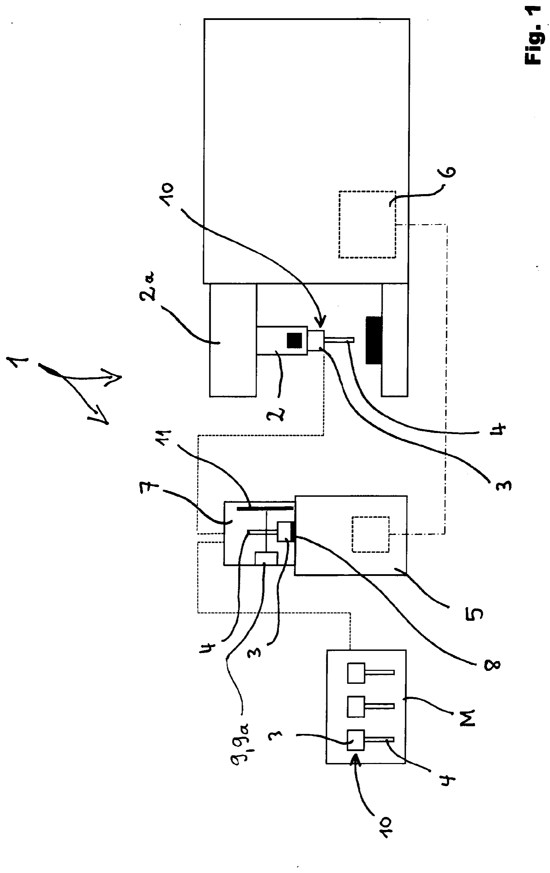

Die Fig. 1 zeigt ein erstes Ausführungsbeispiel eines erfindungsgemäßen Bearbeitungszentrums 1.

Das Bearbeitungszentrum 1 besteht hier aus einer Zerspanungsmaschine 2a mit mindestens einer Arbeitsspindel 2, vorzugsweise in Gestalt einer Mehrachsenfräsmaschine. An besagte Arbeitsspindel 2 ist ein Zerspanungswerkzeug 4 angekoppelt, bevorzugt in Gestalt eines Fräsers.

Die Ankoppelung des Zerspanungswerkzeugs 4 erfolgt meist unter Zwischenschaltung eines Werkzeugspannfutters 3. Das Werkzeugspannfutter 3 hält das Zerspanungswerkzeug drehmomentenfest, arbeitsbereit eingespannt. Es ist seinerseits drehmomentenfest an die Arbeitsspindel der Werkzeugmaschine angekoppelt und dient als genormte Schnittstelle zwischen dem Zerspanungswerkzeug und der individuellen Arbeitsspindel.

Mit der Zerspanungsmaschine 2a ist ein Einstellgerät 5 verkettet, das vorzugsweise mit einer abgedunkelten Messkammer 7 ausgerüstet ist.

Ebenfalls mit den anderen Anlagenbestandteilen verkettet ist oft noch ein Werkzeugmagazin M. Auch das ist in Fig. 1 abgebildet.

In der Messkammer 7 befindet sich die Positioniereinrichtung 8. Hierbei handelt es sich im einfachsten Fall um eine Abstellebene, die in vielen Fällen eine formschlüssig wirkende Positionierhilfe aufweisen wird. Letztere ist so beschaffen, dass sie sicherstellt, dass die Achse, um die die zu vermessende Werkzeugeinheit in der Zerspanungsmaschine rotieren soll, immer an der gleichen Stelle zu liegen kommt.

Auf dem Einstellgerät 5 bzw. in dessen Messkammer 7 wird die erfindungsgemäße Vermessung durchgeführt. Diese liefert die geometrischen Daten eines Hüllkörpers, der die rotierende Werkzeugeinheit 10 vollständig in sich aufnimmt, d. h. ein sog. Abbild der rotierenden Werkzeugeinheit darstellt, das auch digitaler Zwilling genannt wird. Das Abbild der rotierenden Werkzeugeinheit entspricht im Wesentlichen bzw. mit einer Toleranz von 0,5 mm, bevorzugt 0,25 mm, besonders bevorzugt 0,1 mm der wirklichen Gestalt, d. h. dem sog. Realbild der rotierenden Werkzeugeinheit.

Die so gewonnenen Daten gibt das Einstellgerät 5 vorzugsweise an die Steuerung 6 der Zerspanungsmaschine weiter.

Diese bedient sich der vom Einstellgerät 5 gelieferten Daten, um eine rechnerische Simulation durchzuführen, mit dem Ziel zu verifizieren, dass die Werkzeugeinheit auf ihrem programmierten Weg, den sie auf der Zerspanungsmaschine ausführen soll, nirgendwo ungeplant anschlägt und dadurch beschädigt wird oder selbst Schäden verursacht.

### ERSTE VARIANTE DER EIGENTLICHEN MESSANORDNUNG

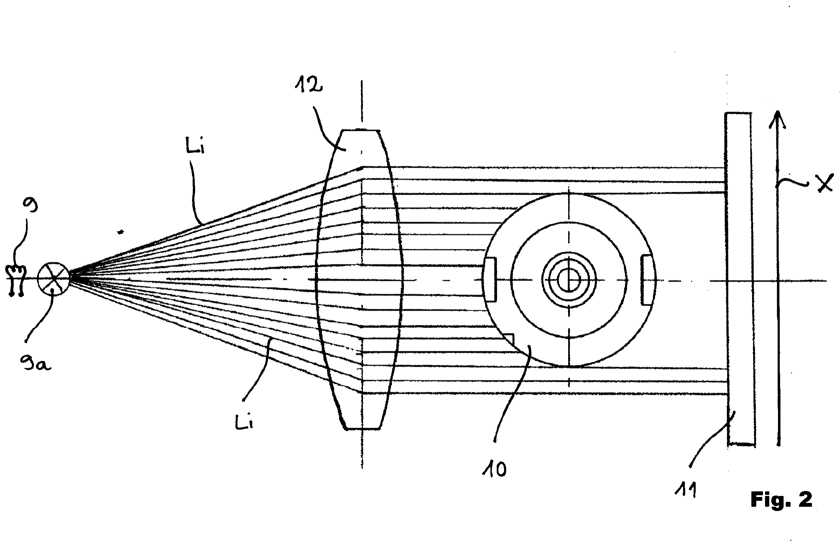

Die Fig. 2 zeigt eine prinzipielle erste Variante der zur erfindungsgemäßen Vermessung verwendeten Messanordnung.

Es kommt eine Lichtquelle 9 zum Einsatz, die im Regelfall parallel gerichtete Lichtstrahlen erzeugt.

Dazu wird bevorzugt eine in Strahlrichtung hinter der eigentlichen Lampe angeordnete Lochblende 9a eingesetzt. Diese dient als punktförmige Lichtquelle.

Die hiervon ausgehenden Lichtstrahlen Li werden durch eine Streulinse 12 so dispergiert, dass sie im Wesentlichen parallel verlaufen, also ihr Brennpunkt im Unendlichen oder im Wesentlichen im Unendlichen liegt.

Erfindungsgemäß wird also ein sog. Kollimator verwendet.

Um den "Dämmerungsbereich" möglichst klein zu halten, der auf dem Bildsensor die Hell-/Dunkelgrenze bildet, kann es eine sinnvolle Option sein, zusätzlich einen Polarisationsfilter einzusetzen, was hier nicht figürlich dargestellt ist.

Optional kann eine hier ebenfalls nicht gezeigte Schlitzblende vorgesehen sein, die dafür sorgt, dass insgesamt nur ein Lichtvorhang ausgegeben wird, der von seiner Erstreckung her so beschaffen ist, dass seine Querschnittsfläche (vollständig oder zumindest im Wesentlichen) der Fläche des Bildsensors entspricht.

Auf der anderen Seite der zu vermessenden und vorzugsweise während der Messung in Rotation versetzten Werkzeugeinheit 10 ist ein Bildsensor 11 angeordnet, der hier als Liniensensor im eingangs definierten Sinne ausgeführt ist. Festzuhalten ist, dass dieser Liniensensor im vorliegenden Bespiel in einer Raumkoordinatenrichtung (hier konkret der der X-Raumkoordinatenrichtung) beidseitig eine größere maximale Erstreckung aufweist als die Werkzeugeinheit 10 in der gleichen Raumkoordinatenrichtung.

Ebenfalls gut zu erkennen ist, dass die zu vermessende Werkzeugeinheit 10 in dem bevorzugt genutzten parallelen Strahlengang einen Schatten wirft, der ein Abbild der rotierenden Werkzeugeinheit 10 ist.

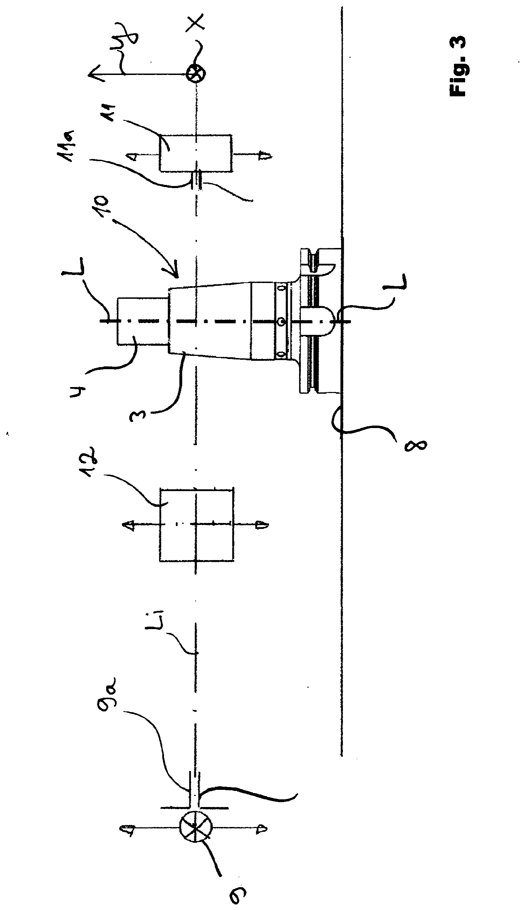

Die Fig. 3 zeigt die Anordnung gemäß Fig. 2 in der Seitenansicht. Bei diesem Ausführungsbeispiel wird die Messung schrittweise in Richtung der späteren Betriebsrotationsachse L der Werkzeugeinheit 10 fortschreitend durchgeführt. Zu diesem Zweck werden die Lichtquelle 9, die Streulinse 12 und der Bildsensor 11 parallel zur Betriebsrotationsachse verfahren. Beispielsweise alle 0,1 mm wird dann der Schattenwurf ermittelt. Dazu kann das Verfahren parallel zur Betriebslängsachse kurz gestoppt werden, es kann aber auch "unter dem Fahren" ein Schnappschuss gemacht werden. Diese Vorgehensweise wiederholt sich so oft von neuem, bis ein vollständiges Abbild der rotierenden Werkzeugeinheit erstellt worden ist.

Idealerweise sind die Lichtquelle 9, die Streulinse 12 und der Bildsensor 11 auf einem gemeinsam verfahrbaren Schlitten oder Rahmen angeordnet.

Alternativ kann die erfindungsgemäße Vorrichtung auch so ausgestaltet sein, dass statt der Lichtquelle 9, der Streulinse 12 und des Bildsensors 11 nur die zu vermessende Werkzeugeinheit 10 in Richtung ihrer Betriebsdrehachse verfahren wird. Die Positioniereinrichtung 8 kann zu diesem Zweck als motorisch betätigter Hubtisch ausgestaltet sein.

Bemerkenswert ist, dass der Liniensensor alternativ in einer Raumkoordinatenrichtung (hier konkret der der X-Raumkoordinatenrichtung) nur einseitig eine größere maximale Erstreckung aufweisen kann als die Werkzeugeinheit 10 in der gleichen Raumkoordinatenrichtung - was hier nicht figürlich dargestellt ist. Dann wird die zu vermessende Werkzeugeinheit nur hälftig vermessen, von ihrem Außenrand bis zu ihrer Betriebsdrehachse. Das erlaubt nicht nur einen kleinflächigeren Bildsensor, sondern reduziert den Datenverarbeitungsaufwand, beschleunigt also den Arbeitsprozess.

Ebenfalls bemerkenswert ist, dass an Stelle der konventionellen Lichtquelle vorzugsweise ein Balken mit einer Vielzahl von nebeneinander angeordnet, parallel zueinander austretenden Laserstrahlen eingesetzt wird. Laserstrahlen stellen kohärentes Licht zur Verfügung. Das hat den enormen Vorteil, dass praktisch kein "Dämmerungsbereich" zwischen der Hell-/Dunkelgrenze auftritt. Daher kann mit einfachen Mitteln sehr genau gemessen werden.

Dabei kann der Balken durch eine Anzahl auf ihm nebeneinanderliegender Laserdioden gespeist werden, etwa nach dem Vorbild des Patents EP 0 486 175.

Vorzugsweise wird er jedoch von einer einzigen, meist zentralen Laserquelle gespeist. Deren Lichtstrahl wird durch einen Strahlteiler mehrfach aufgespalten. Dann wird er über optische Leiter, meist in Gestalt von Glasfasern, den einzelnen Austrittsöffnungen in dem besagten Balken zugeleitet.

Bei dieser Laser-Ausführungsform sind die Anzahl und der Abstand der einzelnen Laserquellen oder Laseraustrittsöffnungen und die Anzahl und der Abstand der einzelnen für einen Laserstrahl zuständigen Pixel oder Pixel-Cluster aufeinander abgestimmt. Sie entsprechen sich dann im Regelfall.

### ZWEITE VARIANTE DER EIGENTLICHEN MESSANORDNUNG

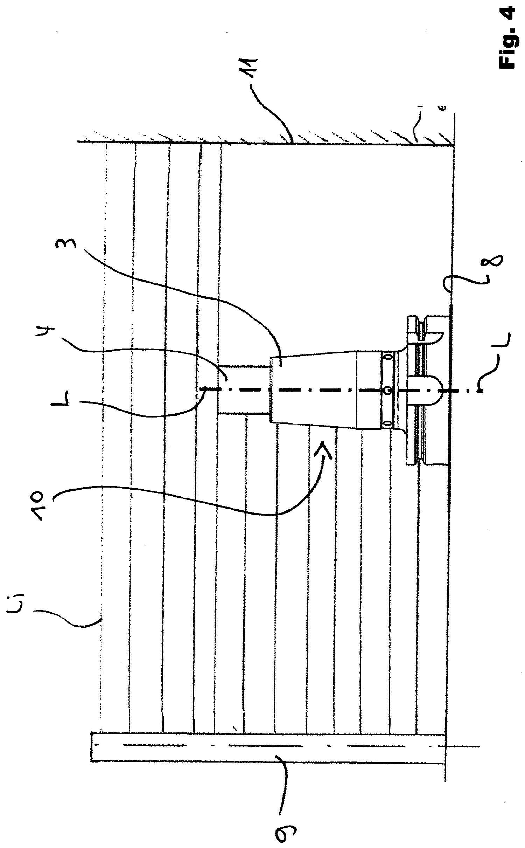

Diese zweite, von Fig. 4 gezeigte Variante entspricht in ihrer Funktionsweise und ihrem Aufbau der ersten Variante - mit Ausnahme der nachfolgend explizit beschriebenen Unterschiede bzw. Option.

Das für die erste Variante Beschriebene einschließlich aller denkbaren Abwandlungen gilt also auch hier.

Der Unterschied liegt darin, dass hier nicht schrittweise in Richtung entlang der Betriebsrotationsachse L der zu vermessenden Werkzeugeinheit 10 gemessen wird, sondern senkrecht dazu, d. h. der Liniensensor ist mit seiner größten Länge parallel zur Betriebsrotationsachse L ausgerichtet.

Das macht es sehr einfach, die zu vermessende Werkzeugeinheit nur hälftig zu vermessen, von ihrem Außenrand bis zu ihrer Betriebsrotationsachse, und somit die oben angegebenen Vorteile zu verwirklichen.

Eine weitere Option, die auch bei der ersten Variante zum Einsatz kommen kann, illustriert die Fig. 4: Statt einer konventionellen Lampe mit nachgeschaltetem Kollimator kommt ein Dioden- oder Laserbalken zum Einsatz, um eine Schar linienförmig angeordneter Lichtstrahlen auszubilden, die nach Art eines ebenen Lichtvorhangs ausgebildet sind.

### DRITTE VARIANTE DER EIGENTLICHEN MESSANORDNUNG

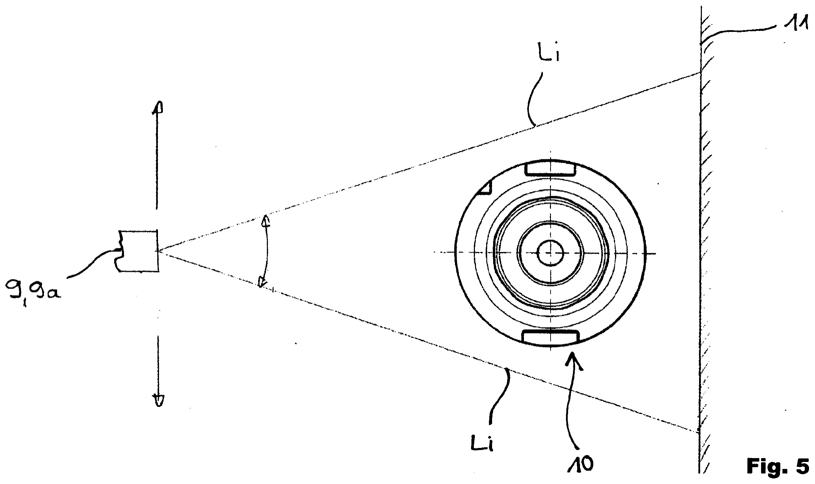

Die Figur 5 zeigt eine weitere Variante der erfindungsgemäßen Messanordnung.

Anstatt eines Lichtvorhangs aus kollimiertem Licht kommt hier bevorzugt ein gefächerter Lichtstrahl zum Einsatz.

Sofern es auf die Geschwindigkeit ankommt, empfiehlt sich ein solcher, von Haus aus optisch aufgefächerter Lichtstrahl. Der Lichtstrahl kann derart optisch aufgefächert werden, sodass sich beispielsweise ein dreieckiger, sich immer weiter verbreiternder Lichtstrahl ergibt, wie das die Figur 5 zeigt.

Hinter der zu vermessenden Werkzeugeinheit ist wieder ein Bildsensor angebracht, beispielsweise ein Liniensensor wie oben beschrieben.

Gut zu erkennen ist, dass der aufgefächerte Lichtstrahl den gesamten linienförmigen Bildsensor vorzugsweise auf einmal belichtet. Durch die Auffächerung des Lichtstrahls ergibt sich allerdings eine Art Parallaxe, auch das ist anhand der Figur 5 gut zu erkennen - der Schattenwurf erscheint breiter, als es die Größe der zu vermessenden Werkzeugeinheit rechtfertigt. Der Parallaxenfehler lässt sich aber leicht mathematisch berechnen und dadurch korrigieren.

Bei dieser Ausführungsform ist es besonders günstig, wenn als Lichtquelle ein Laser dient, dessen Lichtstrahl nachträglich aufgefächert wird, flächig oder in einzelne Teilstrahlen. Denn trotz der Auffächerung bleibt das Licht natürlich kohärent (bei Auffächerung in einzelne Teilstrahlen) oder es ist zumindest sein sehr präziser Fächer vorhanden (bei flächiger, gleichsam "verschmierter" Auffächerung), sodass sich eine gute ermittelbare Hell-/Dunkelgrenze ergibt.

Der Lichtfächer kann horizontal ausgerichtet und vertikal verfahrbar sein oder umgekehrt.

Sofern ein Liniensensor der oben beschriebenen Art zum Einsatz kommt, wird dieser synchron zum Lichtfächer linear verfahren, so wie ebenfalls schon oben beschrieben.

### VIERTE VARIANTE DER EIGENTLICHEN MESSANORDNUNG

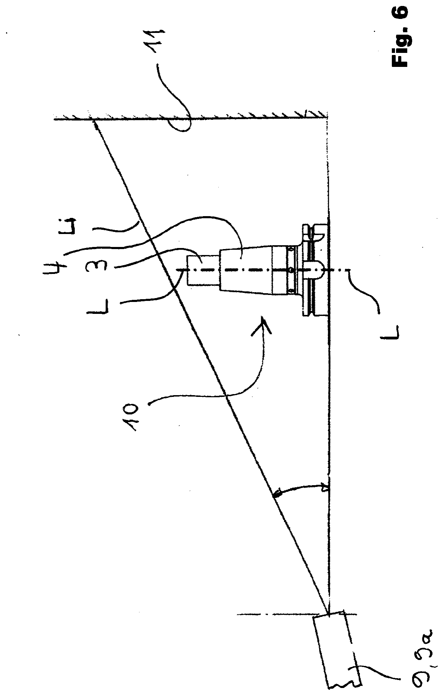

Alternativ kann statt der Auffächerung auch ein einzelner, zumindest im Wesentlichen geradliniger Licht- bzw. Laserstrahl verwendet werden, der beispielsweise über einen Schwenkmechanismus oder über eine Optik wie einen diskreten Spiegel oder eine elektrisch ansteuerbare Mikrospiegelmatrix Schritt für Schritt abgelenkt wird, so, wie das die Fig. 6 zeigt.

Die Ablenkung erfolgt jeweils so, dass er auf den Bildsensor auftrifft oder auftreffen müsste, wenn nicht die zu vermessende Werkzeugeinheit im Weg wäre.

Auch in diesem Fall lässt sich unter mathematischer Korrektur leicht das Schattenbild der zu vermessenden Werkzeugeinheit bestimmen.

### FÜNFTE VARIANTE DER EIGENTLICHEN MESSANORDNUNG

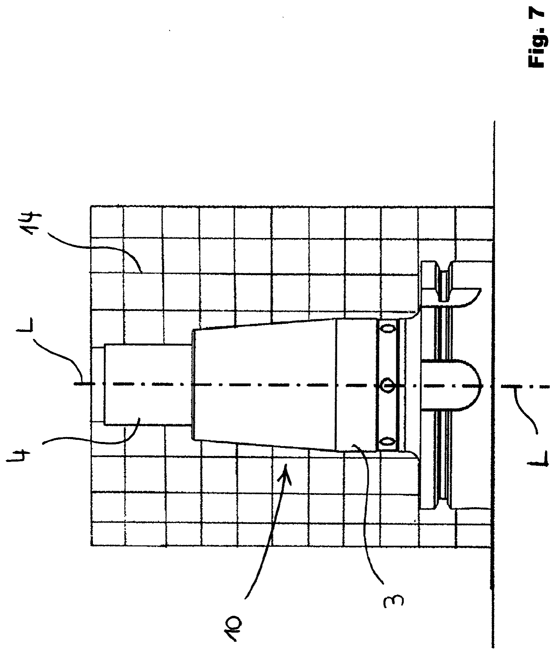

Die Figur 7 zeigt eine weitere, konzeptionell grundlegend abweichende Variante der erfindungsgemäßen Messanordnung.

Es handelt sich um eine Messanordnung, die sich eines speziellen Verfahrens zur Herstellung eines digitalen Zwillings einer Werkzeugeinheit 10 aus einem Werkzeughalter bzw. Spannfutter 3 und einem Werkzeug 4 bedient, wie eingangs beschrieben.

Gut zu erkennen sind das Messraster 14, das aus sich orthogonal kreuzenden Linien besteht, und die davor angeordnete Werkzeugeinheit.

Gearbeitet wird hier meist mit einem konventionellen Bildsensor, wie er für digitale Kameras im Einsatz ist. Bezogen auf die Ebene mit dem Messraster ist der Bildsensor auf der diametral gegenüberliegenden Seite der zu vermessenden Werkzeugeinheit angeordnet.

Der in Fig. 7 nicht zu erkennende Bildsensor ist so gestaltet, dass er ein Digitalbild aufnimmt, mit dessen Hilfe sich die Länge der einzelnen Messlinien in horizontaler und vertikaler Richtung ermitteln lässt. Komplett vertikal bzw. horizontal durchgehende Messlinien werden ignoriert. Es werden die Messlinien ermittelt, die nicht komplett durchgehen, weil sie teilweise durch die zu vermessende Werkzeugeinheit abgedeckt werden.

Dann wird beispielsweise ermittelt, in welcher Entfernung vom Rand des Messrasters die jeweilige Messlinie endet. Der jeweilige Endpunkt entspricht einem Punkt auf der Hüllkontur der vorzugsweise bei der Messung rotierenden Werkzeugeinheit. Interpoliert man nun beispielsweise zwischen den jeweils benachbarten Endpunkten linear oder in höherer Ordnung, dann erhält man dadurch das der Hüllkontur der Werkzeugeinheit im Wesentlichen entsprechende Abbild.

### OPTIONEN FÜR ALLE VARIANTEN

Generell ist zu beachten, dass für jegliche Kollisionsbetrachtung die nutzbaren Schneidenbereiche des Werkzeugs außer Acht bleiben müssen. Denn die Schneidenbereiche des Werkzeugs dürfen in das Werkstück eintauchen, ohne dass eine Kollision vorliegt.

Um die nutzbaren Schneidenbereiche auszuschließen, besteht die Möglichkeit, die Information über die Lage der nutzbaren Schneidenbereiche aus der Werkzeugvoreinstellung und der dabei erfolgten Vermessung zu übernehmen und dann das erfindungsgemäß erzeugte Abbild rechnerisch entsprechend zu beschneiden.

Alternativ ist es möglich, die Schneidenbereiche am realen Werkzeug farblich zu kennzeichnen und dann die gefärbten Bereiche automatisch zu erkennen. Eine solche farbliche Kennzeichnung kann beispielsweise mithilfe eines Sprays aus UV-Leuchtlack vorgenommen werden, der erst unter UV-Licht eine erkennbare Lichtreflexion aufweist, sich aber ansonsten transparent verhält.

Es werden dann eine entsprechend emittierende Lichtquelle und ein weiterer auf der Seite der Lichtquelle positionierter Sensor eingesetzt, der die Fläche erkennen kann, die der UV-Leuchtlack anzeigt, sodass diese berücksichtigt werden kann.

Alternativ kann eine manuelle Markierung am digitalen Abbild erfolgen oder aber, was oft einfacher ist, es kann vor Ausführung der erfindungsgemäßen Aufnahme eine Blende gesetzt werden. Diese schattet den gesamten nutzbaren Schneidenbereich ab und hinterlässt auf dem Bildsensor ein auffälliges Schattenmuster. Dieses kann leicht als für die Ermittlung der kollisionsrelevanten Hüllkontur nicht zu berücksichtigender Bereich erkannt werden.

### WEITERE FUNKTIONEN

Wenn die Werkzeugeinheiten, Werkzeuge oder Werkzeughalter, die zu vermessen sind, in geeigneter Weise gekennzeichnet sind, dann können sie automatisch erkannt werden. Denkbar sind hier ein sogenannter Data Matrix-Code, ein Strichcode, andere maschinenlesbaren Beschriftungen und elektromagnetische Datenträger wie zum Beispiel RFID-Chips. Vorteilhaft ist auf dem RFID-Chip ein EEPROM, oder Flash-Speicher, oder dergleichen eingesetzt. Unter Umständen sind hierfür zusätzliche Leseeinheiten notwendig, wie zum Beispiel Schreib-/Leseköpfe für RFID-Chips oder Scanner für Strichcodes.

Die neu erstellten digitalen Zwillinge eines Werkzeugs, eines Werkzeughalters oder einer Werkzeugeinheit können mit vorhandenen Datensätzen verglichen und dadurch identifiziert werden.

Wenn die Einzelkomponenten einer Werkzeugeinheit identifiziert sind, kann aus den Daten eine Stückliste für die gesamte Werkzeugeinheit erstellt werden, gegebenenfalls unter Hinzufügung einer Montageanweisung. Zusammen mit der Stückliste können auch geometrische Daten mit abgelegt werden, beispielsweise die Gesamtlänge des Werkzeugs oder der Werkzeugeinheit.

Auf der Basis der digitalen Zwillinge der Werkzeugeinheiten oder der einzelnen Werkzeuge bzw. Werkzeughalter können alternative oder ähnliche Werkzeuge ermittelt werden, die bereits für andere Bearbeitungsfälle verwendet werden. Es ist also leicht möglich, bei Feststellung einer potentiellen Kollision oder eines jedenfalls zu geringen Freigangs eine alternativ einzusetzende Werkzeugeinheit zu ermitteln und vorzuschlagen.

Auf diese Art und Weise kann ggf. auch der Werkzeugbestand minimiert werden, da dann mehrere ähnliche Werkzeuge durch eine gemeinsame Ausführung ersetzt werden können.

Durch das erfindungsgemäße Verfahren werden die vorhandenen physischen Werkzeugeinheiten bzw. Werkzeuge und Werkzeughalter schnell und einfach digitalisiert. Es kann also leicht eine elektronische Datenbank samt Einzelkomponenten erzeugt werden.

### BEZUGSZEICHENLISTE

- 1: Bearbeitungszentrum
- 2: Arbeitsspindel
- 2a: Zerspanungsmaschine
- 3: Spannfutter bzw. Werkzeughalter
- 4: Zerspanungswerkzeug
- 5: Einstellgerät
- 6: Steuerung der Zerspanungsmaschine
- 7: abgedunkelte Messkammer
- 8: Positioniereinrichtung
- 9: Lichtquelle
- 9a: Loch- oder Schlitzblende (lampenseitig)
- 10: zu vermessende Werkzeugeinheit
- 11: Bildsensor
- 11a: Blende bzw. Schlitzblende (bildsensorseitig)
- 12: Streulinse
- 13: nicht verwendet
- 14: Messraster

- M: Magazin des Werkzeugwechslers bzw. Werkzeugmagazin
- Li: Lichtstrahl bzw. Lichtstrahlengang
- L: Betriebsrotationsachse der Werkzeugeinheit

## Patentansprüche

1. Bearbeitungszentrum (1) zum Zerspanen von Werkstoffen, bestehend aus einer Zerspanungsmaschine (2a) und einem Einstellgerät (5), wobei das Einstellgerät (5) eine Positioniereinrichtung (8), eine Beleuchtungseinrichtung (9, 9a) und einen Bildsensor (11) aufweist, wobei die Positioniereinrichtung (8) eine mittels der Beleuchtungseinrichtung (9, 9a) anzustrahlende Werkzeugeinheit (10) derart vor dem Bildsensor (11) hält, dass der Bildsensor (11) von der Werkzeugeinheit (10) teilweise abgeschattet wird, wobei der Bildsensor (11) in mindestens einer Raumkoordinatenrichtung eine größere maximale Erstreckung aufweist als die Werkzeugeinheit (10) in der gleichen Raumkoordinatenrichtung, und wobei mithilfe des Werts für die Erstreckung des abgeschatteten Bereichs die Hüllkontur der Werkzeugeinheit (10) bestimmt wird,
**dadurch gekennzeichnet, dass**
das Einstellgerät derart konfiguriert ist, dass die nutzbaren Schneidenbereiche eines in den Werkzeughalter eingesetzten Werkzeugeinsatzes bei der Berechnung der Hüllkontur der Werkzeugeinheit rechnerisch außer Betracht gelassen werden.

2. Bearbeitungszentrum (1) nach Anspruch 1,
**dadurch gekennzeichnet, dass**
der Bildsensor (11) in zwei zueinander senkrechten Raumkoordinatenrichtungen eine größere maximale Erstreckung aufweist als die Werkzeugeinheit (10) in den gleichen Raumkoordinatenrichtungen.

3. Bearbeitungszentrum (1) nach Anspruch 1,
**dadurch gekennzeichnet, dass**
der Bildsensor (11) ein Liniensensor ist, der sich in eine erste Raumkoordinatenrichtung erstreckt und in mehreren nacheinander folgenden Schritten entlang einer zweiten, dazu senkrechten Raumkoordinatenrichtung fortschreitend misst, wobei die Erstreckung des Liniensensors in Richtung entlang der ersten Raumkoordinatenrichtung um mindestens den Faktor 20 größer ist als entlang der zweiten Raumkoordinatenrichtung.

4. Bearbeitungszentrum (1) nach Anspruch 1 oder 3,
**dadurch gekennzeichnet, dass**
sich zumindest der Liniensensor und die Lichtquelle (9) nach jeder Messung in Richtung der zweiten Raumkoordinatenrichtung bewegen.

5. Bearbeitungszentrum (1) nach Anspruch 1 oder 3,
**dadurch gekennzeichnet, dass**
sich das Werkstück nach jeder Messung in Richtung der zweiten Raumkoordinatenrichtung bewegen.

6. Bearbeitungszentrum (1) nach einem der vorhergehenden Ansprüche,
**dadurch gekennzeichnet, dass**
die Beleuchtungseinrichtung (9, 9a) paralleles, besser polarisiertes und bevorzugt kohärentes Licht aussendet.

7. Bearbeitungszentrum (1) nach einem der vorhergehenden Ansprüche,
**dadurch gekennzeichnet, dass**
der oder die Lichtstrahlen (Li) der Beleuchtungseinrichtung (9, 9a) nicht auf die Werkzeugeinheit (10) fokussiert sind.

8. Bearbeitungszentrum (1) nach einem der vorhergehenden Ansprüche,
**dadurch gekennzeichnet, dass**
die Signalstärke ausgewertet wird, die ein einzelnes Pixel unter Lichteinfall liefert, und ein Pixel als abgedunkelt bewertet wird, wenn seine Signalstärke einen bestimmten Anteil eines Pixels überschreitet, das als zu 100 % beleuchtet detektiert wird, bevorzugt 75 %.

9. Bearbeitungszentrum (1) nach einem der vorhergehenden Ansprüche,
**dadurch gekennzeichnet, dass**
die Positioniereinrichtung (8) so gestaltet ist, dass die Werkzeugeinheit (10) während der Messung in Rotation versetzt werden kann.

10. Bearbeitungszentrum (1) nach einem der vorhergehenden Ansprüche,
**dadurch gekennzeichnet, dass**
das Bearbeitungszentrum (1) eine im Wesentlichen vollständig abdunkelbare Messkammer besitzt, deren Innenoberflächen vorzugsweise lichtschluckend ausgerüstet sind.

11. Bearbeitungszentrum (1) nach einem der vorhergehenden Ansprüche,
**dadurch gekennzeichnet, dass**
die rotierende Werkzeugeinheit (10) vor einem Messraster (14) positioniert ist, und dass ein digitales Bild von dem Messraster (14) mit der davorstehenden Werkzeugeinheit (10) aufgenommen ist.

12. Bearbeitungszentrum (1) nach einem der vorhergehenden Ansprüche,
**dadurch gekennzeichnet, dass** die Positionierungseinrichtung (8) ist so gestaltet, dass sie eine mittels der Beleuchtungseinrichtung (9, 9a) anzustrahlende Werkzeugeinheit (10) derart vor dem Bildsensor (11) in Position hält, dass der Bildsensor (11) von der Werkzeugeinheit (10) teilweise abgeschattet wird.

13. Bearbeitungszentrum (1) nach Anspruch 12,
**dadurch gekennzeichnet, dass**
die Erstreckung bzw. Länge des abgeschalteten Bereichs mit einer Genauigkeit von mindestens 0,5 mm, insbesondere mindestens 0,25 mm, idealerweise von zumindest 0,1 mm zu ermitteln ist.

14. Verfahren zur Herstellung eines digitalen Zwillings einer Werkzeugeinheit (10) aus einem Werkzeughalter und einem Werkzeugeinsatz, wobei die Werkzeugeinheit (10) vor einem Bildsensor (11) positioniert wird, der in einzelne Pixel unterteilt ist, für die ausgegeben wird, ob das betreffende Pixel belichtet oder unterbelichtet ist, und dass die Werkzeugeinheit (10) mit mindestens einem Strahl aus gerichtetem Licht bestrahlt wird, der entweder von der Werkzeugeinheit (10) reflektiert wird oder auf den Bildsensor (11) auftrifft, und wobei aus den von der Werkzeugeinheit (10) ganz oder teilweise abgeschatteten und daher unterbelichteten Pixeln die Hüllkontur der Werkzeugeinheit (10) berechnet wird,
**dadurch gekennzeichnet, dass**
die nutzbaren Schneidenbereiche eines in den Werkzeughalter eingesetzten Werkzeugeinsatzes bei der Berechnung der Hüllkontur der Werkzeugeinheit rechnerisch außer Betracht gelassen werden.

15. Verfahren nach Anspruch 14,
**dadurch gekennzeichnet, dass**
die Werkzeugeinheit (10) während der Messung in Rotation versetzt wird.

16. Verfahren nach Anspruch 15,
**dadurch gekennzeichnet, dass**
die Rotationsgeschwindigkeit so hoch ist, dass sich ein Schattenwurf ergibt, der als Schattenwurf mit feststehenden Linien erkannt werden kann.

17. Verfahren nach Anspruch 16, wobei aufgrund der Rotation alle Pixel, die zumindest zeitweilig im Bereich des Schattenwurfs liegen, im Mittel nur noch eine Signalstärke liefern, die so weit von der Signalstärke eines zu 100 % beleuchteten Pixels entfernt ist, dass das betreffende Pixel als abgeschattet erkannt wird, insbesondere wenn seine Signalstärke im Mittel maximal 75 % eines Pixels beträgt.

18. Verfahren zur Herstellung eines digitalen Zwillings einer Werkzeugeinheit (10) aus einem Werkzeughalter und einem Werkzeugeinsatz, wobei die vorzugsweise rotierende Werkzeugeinheit (10) vor einem Messraster (14) positioniert wird und dann ein digitales Bild von dem Messraster (14) mit der davorstehenden Werkzeugeinheit (10) aufgenommen wird und anschließend die Länge der sich - im bevorzugt orthogonal - in zwei Raumrichtungen kreuzenden Messlinien bestimmt wird, wobei für Messlinien, deren Länge kürzer ist als die einer ungestört in gleicher Richtung durchgehenden Messlinie, bestimmt wird, an welcher Position die Messlinie endet und aus den so erhaltenen Endpunkten - vorzugsweise durch Interpolation zwischen unmittelbar benachbarten Endpunkten - die Hüllkontur und damit das Abbild der Werkzeugeinheit (10) berechnet wird,
**dadurch gekennzeichnet, dass**
die nutzbaren Schneidenbereiche eines in den Werkzeughalter eingesetzten Werkzeugeinsatzes bei der Berechnung der Hüllkontur der Werkzeugeinheit rechnerisch außer Betracht gelassen werden.

19. Vorrichtung zur Durchführung eines Verfahrens nach einem der Ansprüche 14 bis 18.

20. Verwendung des Schattenwurfs einer rotierenden Werkzeugeinheit (10) auf einem Bildsensor (11), der ein elektronisches Hell-/Dunkelsignal liefert, zur Bestimmung der Hüllkontur der Werkzeugeinheit (10) im Rahmen einer rechnerischen Kollisionsprüfung entlang eines vorgegebenen Bearbeitungswegs entlang und durch ein zu zerspanendes Werkstück,
**dadurch gekennzeichnet, dass**
die nutzbaren Schneidenbereiche eines in den Werkzeughalter eingesetzten Werkzeugeinsatzes bei der Berechnung der Hüllkontur der Werkzeugeinheit rechnerisch außer Betracht gelassen werden.
